(19) Europäisches Patentamt / European Patent Office / Office européen des brevets

(11) **EP 2 148 182 B1**

(12) **EUROPÄISCHE PATENTSCHRIFT**

(45) Veröffentlichungstag und Bekanntmachung des Hinweises auf die Patenterteilung:
**31.10.2012 Patentblatt 2012/44**

(51) Int Cl.:
***G01M 17/007*** *(2006.01)*

(21) Anmeldenummer: **09165073.9**

(22) Anmeldetag: **09.07.2009**

(54) **Verfahren zur Beurteilung der Fahrbarkeit von Fahrzeugen**

Method of assessing the driving behavior of vehicles

Procédé d'évaluation du comportement de conduite de véhicules

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **24.07.2008 AT 11502008**

(43) Veröffentlichungstag der Anmeldung:
**27.01.2010 Patentblatt 2010/04**

(73) Patentinhaber: **AVL List GmbH**
**8020 Graz (AT)**

(72) Erfinder:
• **Schöggl, Peter**
**8151 Hitzendorf (AT)**
• **Bogner, Erik**
**8010 Graz (AT)**

(74) Vertreter: **Babeluk, Michael**
**Patentanwalt**
**Mariahilfer Gürtel 39/17**
**1150 Wien (AT)**

(56) Entgegenhaltungen:
EP-A2- 0 846 945    EP-A2- 0 984 260
EP-A2- 1 085 312    WO-A2-02/081253

**Beschreibung**

Die vorliegende Erfindung betrifft ein Verfahren zur Beurteilung der Fahrbarkeit von Fahrzeugen mit folgenden Schritten:

- Erfassung von fahrbarkeitsrelevanten physikalischen Daten während des Fahrbetriebs des Fahrzeugs;

- Überprüfung der Daten auf das Vorliegen von Triggerbedingungen, die das Vorliegen bestimmter Fahrzustände anzeigen;

- bei Vorliegen eines bestimmten Fahrzustands Berechnung mindestens einer lokalen Bewertung, die eine Beurteilung eines für den Fahrzustand relevanten Bewertungskriteriums ist;

- Berechnung einer Gesamtbewertung für den erfassten Fahrzustand.

Die Fahrbarkeit von Fahrzeugen hat sich in den letzten Jahren zunehmend als wesentlich für die Beurteilung des Fahrzeuges durch den Konsumenten und damit für den wirtschaftlichen Erfolg und die Verkaufszahlen herausgestellt. Es sind erhebliche Anstrengungen unternommen worden, um die Bewertung der Fahrbarkeit eines Fahrzeuges durch Messverfahren zu objektivieren und subjektive Bewertungen durch Testfahrer soweit als möglich zu vermeiden.

Die Anmelderin der vorliegenden Anmeldung hat bereits vor Jahren Systeme zur Bewertung der Fahrbarkeit von Fahrzeugen vorgestellt, die in der EP 0 846 945 A, der EP 0 984 260 A und der EP 1 085 312 A veröffentlicht worden sind. Eine weitere Beschreibung dieser Systeme befindet sich in dem Paper SAE 1998, 980204 LIST Helmut, SCHÖGGL Peter: "Objective Evaluation of Vehicle Driveability".

Grundidee all dieser bekannten Verfahren und Vorrichtungen ist, dass während des Fahrbetriebs eines Fahrzeuges eine Vielzahl von Daten aufgezeichnet wird, aus denen Bewertungsgrößen mittels mathematischer und statistischer Verfahren gewonnen werden. Diese Bewertungsgrößen sind auf bestimmte Fahrzustände des Fahrzeuges bezogen, die vom System aufgrund der Daten automatisch erfasst und erkannt werden. Diese Erkennung erfolgt durch sogenannten Trigger-Bedingungen, das sind bestimmte Konstellationen von Messwerten, die darauf schließen lassen, dass der jeweilige Fahrzustand vorliegt.

Der Stellung eines solchen Systems geht so vor sich, dass zunächst Fahrzustände definiert und Trigger-Bedingungen festgelegt werden. Dann werden in einer Trainingsphase mit unterschiedlichen Testfahrern und unterschiedlichen Fahrzeugen fahrbarkeitsrelevante Daten aufgezeichnet und es werden von den Testfahrern entsprechende Bewertungen abgegeben. Diese Bewertungen werden mit mathematischen und statistischen Verfahren, wie Regressionsanalyse, Fuzzy Logic, neuronalen Netzen und dergleichen in Funktionen übergeführt, die die Bewertungsgrößen so bezogen auf physikalischen Daten berechnen, dass eine möglichst optimale Abbildung der subjektiven Beurteilungen der einzelnen Testfahrer erreicht wird. Das auf diese Weise erstellte und kalibrierte System kann dann für neue Fahrzeuge eingesetzt werden, um automatisch die Fahrbarkeitsbewertungen zu generieren. Gegenstand der vorliegenden Erfindung ist primär der Aufbau und die Funktionsweise des kalibrierten Systems.

Der Grundaufbau von solchen Systemen kann folgendermaßen zusammengefasst werden:

Physikalische Daten

Das System zeichnet während der gewöhnlichen Fahrt eines Fahrzeuges laufend physikalische Daten auf. Es handelt sich dabei einerseits zunächst um Rohdaten, die beispielsweise aus der vorhandenen Fahrzeugelektronik übernommen werden, wie etwa Motordrehzahl, Kühlwassertemperatur, Fahrpedalstellung oder dergleichen. Zusätzliche Daten die benötigt werden aber nicht unmittelbar vom Fahrzeug zur Verfügung gestellt werden können, werden durch entsprechende Sensoren ermittelt, wie etwa Längs- und Querbeschleunigung, Fahrzeuggeräusch, Vibrationen oder dergleichen. Aus diesen physikalischen Rohdaten werden in der Regel in einem weiteren Schritt verarbeitete physikalische Daten gewonnen, wie etwa Drehzahlschwankung, Ruckelfrequenzen, Schaltzeiten, Einkuppelrucke, erwartetes Beschleunigungs-/Verzögerungsvermögen und dergleichen.

Fahrzustände

Um eine detaillierte Beurteilung aller Eigenheiten des Fahrzeuges zu ermöglichen, sind vielerlei Fahrzustände definiert. Dabei handelt es sich beispielsweise um Leerlauf, Motorstart, Anfahren, positiver und negativer Lastwechsel, Schub, Schalten oder dergleichen. Zu jedem dieser Fahrzustände sind Trigger-Bedingungen definiert, das sind Konstellationen der physikalischen Daten, durch die das Vorliegen des jeweiligen Fahrzustandes erkannt werden kann. In ausgefeilteren Systemen sind die Fahrzustände selbst noch hierarchisch untergliedert, nämlich in eine untere Aggregationsebene wie beispielsweise Positiver Lastwechsel nach Schub, Positiver Lastwechsel nach Schalten oder Schalten bei Teillast, Schalten bei Teillast, Einfachschaltungen, Mehrfachschaltungen, usw. und Fahrzustände einer höheren Aggregationsebene, in der die verschiedenen Positiver Lastwechsel-Fahrzustände in einen allgemeinen Fahrzustand Positiver Lastwechsel und die verschiedenen Schalt-Fahrzustände in einen allgemeinen Fahrzustand Schalten zusammengefasst sind.

Zu jedem Fahrzustand wird mindestens ein Bewertungskriterium definiert. In der Regel liegen für jeden Fahrzustand mehrere Bewertungskriterien vor. Bei diesen Bewertungskriterien handelt es sich um Bewertungsaspekte zur Beurteilung des betreffenden Fahrzustandes. Beim Fahrzustand Tip-In kann beispielsweise die Ansprechverzögerung ein Bewertungskriterium sein und das Ruckeln während des Beschleunigungsvorganges ein anderes Bewertungskriterium.

Lokale Bewertungen

Lokale Bewertungen sind Größen, die die Qualität des Fahrzustandes im Hinblick auf das jeweilige Bewertungskriterium ausdrücken. In der Regel werden diese lokalen Bewertungen auf ein Wertespektrum zwischen 1 und 10 normiert, wobei 10 eine exzellente Bewertung darstellt, 9 als alle Kundenerwartung erfüllend, 8 als meisten Kundenerwartungen erfüllend, 7 als störend für einige Fahrer zu werten ist und so weiter. Die lokalen Bewertungen werden aufgrund der in der Trainingsphase gewonnenen Kenntnis durch mathematische Funktionen aus den physikalischen Daten abgeleitet.

Gesamtbewertung

Aus den verschiedenen lokalen Bewertungen der Bewertungskriterien eines bestimmten Fahrzustandes kann durch Zusammenfassung eine Gesamtbewertung für den Fahrzustand berechnet werden. Dies erfolgt im einfachsten Fall durch Bildung eines gewichteten Durchschnittes. Auch die Gesamtbewertung eines Fahrzustandes ist wiederum eine Größe, die sich im Bereich zwischen 1 und 10 bewegt.

Gesamtindex

Gegebenenfalls kann aus allen Gesamtbewertungen der verschiedenen Fahrzustände ein Gesamtindex berechnet werden, der für die Fahrbarkeit des Fahrzeuges repräsentativ ist.

Es ist nun bei Vorliegen eines ausreichend umfangreichen und langen Untersuchungszeitraumes selbstverständlich, dass viele Fahrzustände mehrfach auftreten. Dies ist für die Genauigkeit und Reproduzierbarkeit der Ergebnisse auch wesentlich, um die bei jedem Messvorgang unvermeidliche statistische Streuung auszugleichen. Bei bekannten Systemen wird jeder einzelne Fahrzustand nach seinem Auftreten bewertet und die Bewertungen aller gleichartigen Fahrzustände werden gemittelt. Dies bedeutet, dass man beispielsweise für den Fahrzustand "Positiver Lastwechsel nach Schub", der während des Messzyklus zwanzigmal aufgetreten ist, zwanzig Bewertungssätze berechnet (d.h. beispielsweise zwanzig lokale Bewertungen für das Bewertungskriterium "Ansprechverzögerung" und zwanzig lokale Bewertungen für das Bewertungskriterium "Mehrfachschwingungen" und zwanzig Gesamtbewertungen für den Fahrzustand "Positiver Lastwechsel nach Schub"), die dann jeweils zu einer gemittelten Bewertung weiterverarbeitet werden.

Es hat sich herausgestellt, dass mit dem oben beschriebenen Verfahren das subjektive Empfinden von Testfahrern weitgehend objektiv abgebildet werden kann. Die bestehenden Abweichungen sind bisher auf unvermeidliche Schwankungen, Abweichungen, Messfehler oder sonstige Unwägbarkeiten zurückgeführt worden.

Die vorliegende Erfindung stellt sich die Aufgabe, diese bestehenden Abweichungen weiter zu minimieren, um eine bessere Übereinstimmung der Berechnungsergebnisse mit den subjektiven Bewertungen zu erreichen.

Erfindungsgemäß ist vorgesehen, dass bei wiederholtem Auftreten von identischen Fahrzuständen für die Bewertungen eine Korrekturgröße berechnet wird, die von den Unterschieden im Verhalten des Fahrzeugs bei den identischen Fahrzuständen abhängt und dass eine korrigierte Bewertung berechnet wird, in der diese Korrekturgröße/Abweichung berücksichtigt ist.

Das Grundprinzip der vorliegenden Erfindung beruht auf der Überlegung, dass das durchschnittliche Verhalten des Fahrzeuges bei einer bestimmten Art von Fahrzustand nicht allein maßgeblich für die Bewertung dieses Fahrzustandes ist. Es ist zu beobachten, dass auch die Reproduzierbarkeit des Verhaltens in Bezug auf einen bestimmten Fahrzustand ein nicht unwesentliches Qualitäts- oder Komfortmerkmal ist. Mit anderen Worten ausgedrückt wird von den meisten Fahrern ein Fahrzeug, das sich in Bezug auf einen bestimmten Fahrzustand jedes Mal mittelgut verhält, im Endeffekt besser beurteilt als ein anderes Fahrzeug, das sich bei Auftreten dieses Fahrzustandes fallweise deutlich besser aber auch fallweise deutlich schlechter verhält. Um diesem Umstand Rechnung zu tragen, wird dem erfindungsgemäßen Verfahren nicht einfach ein Mittelwert über die einzelnen Bewertungen eines bestimmten Fahrzustandes gebildet, sondern es wird auch über eine Korrekturgröße die Schwankung des Verhaltens berücksichtigt. Mathematisch ausgedrückt kann eine solche Berücksichtigung folgendermaßen vorgenommen werden:

Zunächst wird angenommen, dass ein bestimmter Fahrzustand während eines Testzyklus n-mal detektiert wird. Aus den n Ereignissen können somit n Sätze von lokalen Bewertungen gewonnen werden, von denen eine lokale Bewertung IB beispielhaft herausgegriffen wird. Zunächst wird gemäß Gleichung (1) ein Mittelwert MW aus den n lokalen Bewertungen IB gebildet:

$$MW = \frac{1}{n}(lB_1 + lB_2 + ... + lB_n) \qquad (1)$$

Beim Verfahren nach dem Stand der Technik wäre dieser Mittelwert die letztlich ausgegebene lokale Bewertung für das betreffende Bewertungskriterium. Im erfindungsgemäßen Verfahren wird jedoch zunächst zu jedem Einzelwert der lokalen Bewertung IB eine Abweichung AW vom Mittelwert MW berechnet:

$$AW_i = lB_i - MW \qquad (2)$$

Aus den aus Gleichung (2) erhaltenen n Abweichungen AW wird nun in Gleichung (3) eine Korrekturgröße berechnet, wobei eine passende Funktion f eingesetzt wird:

$$KG = f(AW_1, AW_2, ... AW_n) \qquad (3)$$

Letztlich wird unter Berücksichtigung der Korrekturgröße in Gleichung (4) eine korrigierte lokale Bewertung IB errechnet:

$$lB = MW - KG \qquad (4)$$

Das obige Berechnungsverfahren gemäß den Gleichungen (1) bis (4) könnte beispielsweise für die lokale Bewertung für das Bewertungskriterium "Ruckeln" beim Fahrzustand "Tip-In" eingesetzt werden. Parallel dazu werden für andere Bewertungskriterien des Fahrzustandes "Tip-In" weitere korrigierte lokale Bewertungen berechnet. Die Gesamtbewertung für den Fahrzustand "Tip-In" kann einerseits in an sich bekannter Weise durch Bildung eines gewichteten Mittelwertes aus den einzelnen korrigierten lokalen Bewertungen berechnet werden, es kann aber auch ein Berechnungsverfahren verwendet werden, bei dem aus den einzelnen lokalen Bewertungen jeweils eine Gesamtbewertung berechnet wird und die n so erhaltenen Gesamtbewertungen nach dem Verfahren der Gleichungen (1) bis (4) zu einer korrigierten Gesamtbewertung weiterverarbeitet werden (anstelle von lokalen Bewertungen IB wären in die Gleichungen (1) bis (4) entsprechend Gesamtbewertungen GB einzusetzen).

Eine bevorzugte Ausführungsvariante der Erfindung sieht vor, dass als Korrekturgröße ein Maß für die Unterschiede der einzelnen Bewertungen, vorzugsweise die Varianz der Bewertungen bei gleichen Fahrzuständen eingesetzt wird. Sofern keine besonderen Informationen über die Natur der Wahrnehmung bei den einzelnen Testpersonen vorliegt, hat es sich als universellste Maßnahme herausgestellt, im Wesentlichen die Varianz der einzelnen Bewertungen als Korrekturgröße zu verwenden. Praktisch bedeutet dies, dass die obige Gleichung (3) konkret durch die Gleichung (5) ausgedrückt wird:

$$KG = \frac{K}{n-1}(AW_1^2 + AW_2^2 + ... + AW_n^2) \qquad (5)$$

Dabei stellt die Korrekturgröße KG die Varianz der einzelnen Abweichungen AW dar, multipliziert mit einem Proportionalitätsfaktor K, der empirisch für den jeweiligen Fahrzustand und das jeweilige Bewertungskriterium bestimmt werden muss. Die Korrekturgröße von Gleichung (5) kann wie oben in Gleichung (4) weiterverarbeitet werden, wobei anstelle der subtraktiven Berücksichtigung jedoch auch eine entsprechend gestaltete multiplikative Berechnung erfolgen kann, die beispielsweise in Gleichung (6) angegeben ist:

$$lB = MW(1 - KG) \qquad (6)$$

Eine weitere Variante des erfindungsgemäßen Verfahrens sieht vor, dass als Korrekturgröße ein Maß für die Unterschiede in einer physikalischen Größe eingesetzt wird, die für die Bewertung wesentlich ist. Es ist zunächst festzustellen, dass für eine Reihe von Bewertungskriterien eine bestimmte physikalische Größe von überragender Bedeutung ist und andere physikalische Größen nur eine untergeordnete aber dennoch wichtige Rolle spielen. So ist beispielsweise für den Fahrzustand "Leerlauf" das Bewertungskriterium "Leerlaufdrehzahl" hauptsächlich von einer physikalischen Größe "gemittelte Drehzahl" abhängig, das ist ein Wert der Drehzahl, der über einen bestimmten Beobachtungszeitraum gemittelt ist. In die lokale Bewertung der Leerlaufdrehzahl gehen aber auch weitere physikalische Größen ein, wie etwa die Motortemperatur, da bei kaltem Motor eine erhöhte Leerlaufdrehzahl als vorteilhaft angesehen wird.

Es wird sich nun beim Training des Systems für die lokale Bewertung "Leerlaufdrehzahl" eine Gleichung herausstellen, bei der die Höchstnote dann erzielt wird, wenn die durchschnittliche Drehzahl in Abhängigkeit von der Motortemperatur bei einem optimal empfundenen Wert liegt. Die lokale Bewertung wird umso schlechter sein, je weiter die tatsächliche durchschnittliche Drehzahl von diesem optimalen Wert entfernt ist. Es wird nun anstelle der obigen Gleichung (1) in der nachfolgenden Gleichung (7) ein modifizierter Mittelwert MW' berechnet, der als Durchschnitt der einzelnen physikalischen Größen $phG_i$ berechnet wird:

$$MW' = \frac{1}{n}(phG_1 + phG_2 + \dots + phG)_n \qquad (7)$$

In der die Gleichung (2) ersetzende Gleichung (8) werden aus den einzelnen physikalischen Größen $phG_i$ die Abweichungen $AW_i$ berechnet. Wie oben erwähnt, kann es sich bei phG beispielsweise um die durchschnittliche Leerlaufdrehzahl handeln. Das hier beschriebene alternative Berechnungsverfahren hat den Vorteil, dass es auch auf solche Bewertungskriterien anwendbar ist, bei denen es nicht darauf ankommt, dass bestimmte physikalische Größen oder Konstellationen von physikalischen Größen einen möglichst großen oder möglichst kleinen Wert annehmen, sondern bei denen ein optimaler Wert angestrebt wird. Dieses alternative Berechnungsverfahren kann somit auch Fälle erfassen, bei denen die Leerlaufdrehzahl bei den einzelnen Ereignissen "Leerlauf" abwechselnd nach oben und nach unten abweicht, was aber von den lokalen Bewertungen nicht entsprechend abgebildet wird, da eine zu hohe Leerlaufdrehzahl zu der gleichen lokalen Bewertung führen kann, wie eine zu geringe Leerlaufdrehzahl. Wie oben ausgeführt, wird aber beispielsweise eine gleichmäßig zu geringe Leerlaufdrehzahl angenehmer empfunden, als eine Leerlaufdrehzahl, die einmal zu hoch und einmal zu niedrig ist. Durch die Gleichungen (7) und (8) kann dieses Phänomen dementsprechend berücksichtigt werden:

$$AW_i = phG_i - MW' \qquad (8)$$

Eine weitere begünstigte Ausführungsvariante der folgenden Erfindung sieht vor, dass für die Berechnung der Korrekturgröße eine Funktion verwendet wird, in die die Zeit zwischen dem Auftreten einzelner Fahrzustände und die Abfolge der Abweichungen berücksichtigt wird. Auf diese Weise wird dem Umstand Rechnung getragen, dass eine Änderung des Verhaltens in der Regel als umso störender empfunden wird, je kürzer die Abstände zwischen den einzelnen Ereignissen sind. So könnte beispielsweise anstelle der Gleichungen (1) bis (3) zunächst in der folgenden Gleichung (9) ab dem zweiten Auftreten eines Fahrzustandes für jede lokale Bewertung ein Wert $Diff_i$ berechnet werden, der den Unterschied zwischen den einzelnen lokalen Bewertungen ausdrückt, geteilt durch die Zeitspanne t zwischen dem Zeitpunkt des Auftretens des jeweiligen Fahrzustandes und dem Zeitpunkt, bei dem der betreffende Fahrzustand das letzte Mal aufgetreten ist:

$$Diff_i = \frac{1}{t}(lB_1 - lB_{i-1}) \qquad (9)$$

Die einzelnen Werte $Diff_i$ werden analog zu Gleichung (3) durch Anwendung einer passenden Funktion zu einer Korrekturgröße verarbeitet:

$$KG = f(Diff_2, Diff_3, ... Diff_n) \qquad (10)$$

Wiederum ist beispielsweise die Varianz eine einfache und sinnvolle Funktion dieser Art, wie dies aus Gleichung (11) hervorgeht:

$$KG = \frac{K}{n-2}(Diff_2^2 + Diff_3^2 + ... + Diff_n^2) \qquad (11)$$

Wiederum bedeutet K einen empirisch ermittelten Proportionalitätsfaktor.

An sich ist es möglich, einzelnen lokale Bewertungen nach dem oben beschriebenen Verfahren zu korrigieren, jedoch andere lokale Bewertungen in herkömmlicher Weise zu berechnen, wenn sich bei der Trainingsphase des Systems herausstellt, dass Änderungen hier nicht als kritisch empfunden werden. Besonders bevorzugt ist es jedoch, alle lokalen Bewertungen dem oben beschriebenen Formalismus zu unterwerfen.

Neben einer Berechung aufgrund der obigen Formeln ist es aber in vereinfachten Fällen auch möglich, lediglich Extremwerte von einzelnen lokalen Bewertungen und/oder physikalischen Größen für die Berechnung der Korrekturgröße heranzuziehen. Dies kann beispielsweise dadurch erfolgen, dass bei der Berechnung der korrigierten lokalen Bewertung Extremwerte stärker gewichtet werden.

Wie oben bereits ausgeführt, kann aus den korrigierten lokalen Bewertungen auf verschiedene Weise eine korrigierte Gesamtbewertung berechnet werden. Im einfachsten Fall werden die einzelnen lokalen Bewertungen entsprechend der Bedeutung des entsprechenden Bewertungskriteriums gewichtet und zu einem Durchschnitt verarbeitet, der die Gesamtbewertung des betreffenden Fahrzustandes darstellt.

Eine weitere besonders bevorzugte Ausführungsvariante des erfindungsgemäßen Verfahrens sieht vor, dass für mindestens ein Bewertungskriterium eine Haupteinflussgröße definiert wird, die für die Beurteilung dieses Bewertungskriteriums wesentlich ist und dass für diese Haupteinflussgröße ein Sollwert berechnet wird, der unter Berücksichtigung der übrigen Einflussgrößen eine optimale Bewertung ergeben würde, und dass die Abweichung der Haupteinflussgröße von diesem Sollwert zur Berechnung der Korrekturgröße herangezogen wird.

Angewendet auf das obige Bespiel der Leerlaufdrehzahl kann also eine optimale Leerlaufdrehzahl $nL_{opt}$ für jede Motortemperatur TMot definiert werden. Das ist diejenige Leerlaufdrehzahl, die die höchstmögliche Bewertung ergibt. Wird diese Funktion mit g bezeichnet, so nimmt diese Beziehung die Form der folgenden Gleichung (12) an:

$$nL_{opt} = g(TMot) \qquad (12)$$

Die Funktion g wird empirisch gewonnen, indem für eine Vielzahl verschiedener Motortemperaturen TMot die durchschnittliche Leerlaufdrehzahl mit der zugehörigen Bewertung in Beziehung gesetzt wird und für jede Motortemperatur diejenige durchschnittliche Leerlaufdrehzahl mit der höchsten Bewertung ermittelt wird. Die einzelnen Abweichungen $AW_i$ ergeben sich als Unterschied der tatsächlich gemessenen durchschnittlichen Leerlaufdrehzahl vom oben bestimmten optimalen Wert gemäß Gleichung (13):

$$AW_i = nL_i - nL_{opt} \qquad (13)$$

Der Mittelwert wird aus den Abweichungen gemäß Gleichung (1) berechnet, die Korrekturgröße resultiert aus Formel (3) und die korrigierte lokale Bewertung kann gemäß Gleichung (4) berechnet werden.

Besonders vorteilhaft ist es, wenn die Abweichung der Haupteinflussgröße vom Sollwert für verschiedene Bereiche der übrigen Einflussgrößen getrennt berücksichtigt wird.

Auf diese Weise können beispielsweise die Abweichungen bei niedrigen, mittleren und hohen Motortemperaturen zu eigenen Korrekturgrößen verarbeitet werden, die separat bei der Berechnung der korrigierten lokalen Bewertung berücksichtigt werden. Auf diese Weise ist es möglich, auch ein Verhalten angemessen zu berücksichtigen, bei dem beispielsweise die Leerlaufdrehzahl bei mittleren und hohen Motortemperaturen durchaus nahe dem optimalen Wert liegt, bei niedrigen Motortemperatur jedoch weit davon abweicht. Diese Erkenntnis kann nicht nur zur verbesserten Berechnung einer korrigierten lokalen Bewertung verwendet werden, sondern auch Hinweise auf konkrete Mängel bzw. mögliche Verbesserungsstrategien liefern.

Ein weiteres Bespiel ist eine Zug-Hochschaltung in einem Fahrzeug mit einem automatischen Getriebe oder Doppelkupplungsgetriebe. Bei kleinen Lasten wird in der Regel eine weiche und verschliffene Schaltung erwartet und erwünscht. Bei hohen Lasten und Drehzahlen ist eine schnelle Schaltung ohne merkliche Zugkraftreduktion erwünscht. Es ist daher sinnvoll, die jeweiligen Abweichungen im Verhalten getrennt für diese beiden unterschiedlichen Bereich zu betrachten und auszuwerten.

Weiters ist es von besonderem Vorteil, wenn bei den oben dargestellten Berechnungen der jeweilige Fahrertypus berücksichtigt wird. Dies kann in vielfältiger Weise geschehen. Einerseits ist es möglich, bei der Kalibrierung des Systems verschiedene Fahrertypen zu selektieren und für jeden Fahrertypus einen eigenen Parametersatz zu erarbeiten. Dies kann beispielsweise länderspezifisch erfolgen. Wenn man feststellt, dass die Anforderungen und Erwartungen eines schwedischen Autofahrers deutlich unterschiedlich von denen eines italienischen Autofahrers sind, so kann das System einerseits für einen italienischen und andererseits für einen schwedischen Autofahrer abgestimmt werden, was die Möglichkeit ergibt, ein gegebenes Fahrzeug einerseits für den italienischen Markt und andererseits für den schwedischen Markt zu bewerten und in weiterer Folge abzustimmen. Es ist aber auch möglich, verschiedene Fahrertypen zu charakterisieren, wie etwa sportlich oder komfortorientiert und den jeweiligen Fahrertypus während der Fahrt des Fahrzeuges automatisch zu erfassen. So werden beispielsweise ausgiebige und schnelle Bewegungen des Fahrpedals eher auf einen sportlichen Fahrer hinweisen. In Abhängigkeit vom erfassten Fahrertyp können in weiterer Folge unterschiedliche Funktionen für die Berechnung der Bewertungen des Fahrzustandes herangezogen werden. Bei oben angeführten Beispiel der Zughochschaltung bei einem Fahrzeug mit Automatik-Getriebe kann bei einem sehr sportlichen Fahrer ein deutlich merkbarer Einkuppelruck durchaus positiv empfunden werden, obwohl ein solcher Ruck normalerweise zu einer schlechten Bewertung führt. Neben einer automatischen Bewertung des Fahrertyps ist es auch möglich, zusätzliche Indizien heranzuziehen, wie etwa das Drücken einer Sporttaste in Fahrzeugen, die diese vorsehen.

Das erfindungsgemäße System ist primär für den Einsatz in Fahrzeugen gedacht, die auf der Straße fahren. Mit geringen Modifikationen ist es aber auch möglich, das System im Prüfstandsbetrieb einzusetzen. So kann beispielsweise ein Fahrzeug auf einem Rollenprüfstand untersucht werden. Die nicht zur Verfügung stehenden Daten wie etwa Längsbeschleunigung müssen dabei durch ein geeignetes Modell berechnet werden. Es ist aber auch möglich, das System auf einem Motorenprüfstand einzusetzen, wenn das Fahrzeug nicht oder noch nicht verfügbar ist. Auch hier werden die verfügbaren Daten, wie etwa Motordrehzahl oder Drehmoment direkt an das erfindungsgemäße System übergeben, während die nicht verfügbaren Daten durch ein Simulationsmodell berechnet werden müssen. In weiterer Folge ist es aber auch möglich, das gesamt Fahrzeug durch ein Simulationsmodell abzubilden und die berechneten Daten an das erfindungsgemäße System zu übergeben, um die oben beschriebenen Berechnungen auszuführen.

Die Berechnung der Bewertungsgrößen kann grundsätzlich online, aber auch offline erfolgen. Online-Berechnung heißt, dass die Daten aus dem Fahrzeug in Echtzeit erfasst und verarbeitet werden, so dass es möglich ist, die einzelnen Bewertungsgrößen unmittelbar auf einer im Fahrzeug oder bei telemetrischer Übertragung einer feststehenden Beobachtungsstation anzuzeigen. In der Regel werden aber alle Daten aufgezeichnet und zu einem späteren Zeitpunkt analysiert. Weiters betrifft die vorliegende Erfindung eine Vorrichtung zur Beurteilung der Fahrbarkeit von Fahrzeugen mit einer Datenerfassungseinheit zur Erfassung von fahrbarkeitsrelevanten physikalischen Daten während des Fahrbetriebes des Fahrzeuges mit einer Berechnungseinheit zur Überprüfung der Daten auf das Vorliegen von Trigger-Bedingungen, die das Vorliegen bestimmter Fahrzustände anzeigen und zur Berechnung mindestens einer lokalen Bewertung, die eine Beurteilung eines für den Fahrzustand relevanten Bewertungskriteriums ist und weiterhin Berechnung einer Gesamtbewertung für den erfassten Fahrzustand sowie mit einer Ausgabeeinheit zur Anzeige von physikalischen Daten und Bewertungen.

Erfindungsgemäß ist vorgesehen, dass die Berechnungseinheit dazu ausgebildet ist, bei wiederholtem Auftreten von identischen Fahrzuständen für die Bewertungen eine Korrekturgröße zu berechnen, die von den Unterschieden im Verhalten des Fahrzeuges bei den identischen Fahrzuständen abhängt und eine korrigierte Bewertung zu berechnen, in der diese Korrekturgröße berücksichtigt ist.

Besonders günstig ist es, wenn die Datenerfassungseinheit Sensoren zur Erfassung von fahrbarkeitsrelevanten physikalischen Daten umfasst und weiters eine Schnittstelle zur Fahrzeugelektronik aufweist. Bei den Sensoren handelt es sich beispielsweise um Beschleunigungssensoren zur Erfassung der Längsbeschleunigung und der Querbeschleunigung und dergleichen. Die Schnittstelle zur Fahrzeugelektronik stellt alle hier verfügbaren fahrbarkeitsrelevanten Daten zur Verfügung.

Wenn das Fahrzeug auf einem Rollenprüfstand oder einem Motorprüfstand analysiert wird, so werden die relevanten Daten über eine Schnittstelle zum Prüfstand in das System eingespeist.

In der Folge wird die Erfindung anhand der in den Figuren dargestellten Ausführungsvarianten näher erläutert. Es zeigen:

Fig. 1, Fig. 2 und Fig. 3     Diagramme zur Erläuterung der Erfindung; und

Fig. 4                        ein Blockdiagramm der erfindungsgemäßen Vorrichtung.

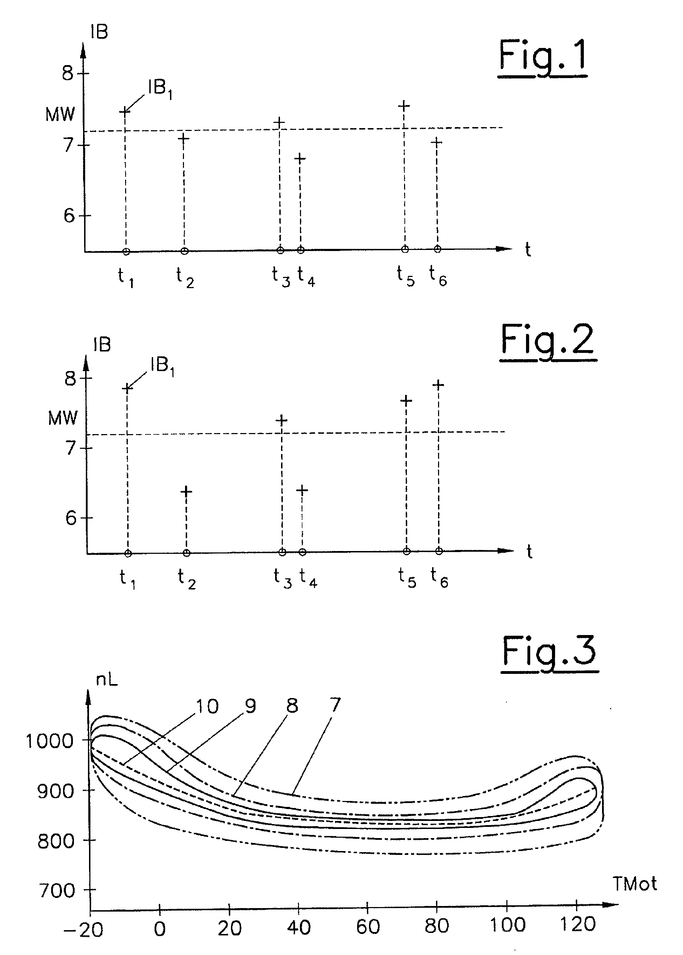

Das Diagramm von Fig. 1 stellt das zeitliche Auftreten eines bestimmten Fahrzustandes und die zugehörige lokale Bewertung eines Bewertungskriteriums dar. Auf der waagrechten Achse ist die Zeit t aufgetragen, während auf der senkrechten Achse eine typische lokale Bewertung IB aufgetragen ist. Bei den in Fig. 1 dargestellten Beispiel wird zu sechs bestimmten Zeiten $t_1$,... $t_6$ ein bestimmter Fahrzustand, beispielsweise "positiver Lastwechsel nach Schub" erkannt. Zu diesen Zeiten wird dem gemäß für ein bestimmtes Bewertungskriterium wie etwa "Ansprechverzögerung" jeweils eine lokale Bewertung $IB_1$,... usw. berechnet. Der Mittelwert MW dieser verschiedenen einzelnen lokalen Bewertungen $IB_1$,...usw. ist mit einer waagrechten unterbrochenen Linie in Fig. 1 eingezeichnet und beträgt im vorliegenden Beispiel 7,2.

In Fig. 2 ist der identische Sachverhalt für ein anderes Fahrzeug dargestellt. Es ist ersichtlich, dass ebenfalls sechs einzelne lokale Bewertungen $IB_1$,... usw. zu unterschiedlichen Zeitpunkten $t_1$,... $t_6$ erhalten werden, wobei der Mittelwert MW wiederum bei 7,2 liegt. Es ist aber auch ersichtlich, dass die einzelnen lokalen Bewertungen $IB_1$,... usw. wesentlich weiter um den Mittelwert MW streuen, als dies bei dem Beispiel von Fig. 1 der Fall ist. Mit dem erfindungsgemäßen Verfahren wird somit eine korrigierte lokale Bewertung IB für das Bewertungskriterium "Ansprechverzögerung" berechnet werden, die beim Fahrzeug von Fig. 1 höher ist als beim Fahrzeug von Fig. 2.

In Fig. 3 ist die Bewertung des Bewertungskriteriums "Leerlaufdrehzahl" in Abhängigkeit der physikalischen Größen gemittelte Drehzahl nL und Motordrehzahl TMot aufgetragen. Die unterbrochene Linie stellt die Wertpaarung dar, bei denen die Leerlaufdrehzahl in Bezug auf die jeweilige Motortemperatur optimal ist. Diese wird dementsprechend mit der Höchstnote 10 bewertet. Die durchgezogene Linie umschließt den Bereich, bei dem die lokale Bewertung ≥9 ist. In analoger Weise stellen die strichpunktierte Linie bzw. die doppelte gepunktete Linie die Bereiche dar, in denen die lokale Bewertung ≥8 bzw. ≥7 ist. Aus dieser Kurve ist zunächst ersichtlich, dass bei sehr tiefen Motortemperaturen die optimale Motordrehzahl größer ist als bei Betriebstemperatur und bei hohen Temperaturen ebenfalls etwas ansteigt. Es ist auch ersichtlich, dass bei sehr tiefen oder bei sehr hohen Temperaturen die Toleranz etwas höher ist als bei normaler Betriebstemperatur, da hier die Bewertungsbereiche etwas breiter sind. Eine differenzierte Beurteilung für unterschiedliche Motortemperaturen TMot trägt hier zur Steigerung der Beurteilungsqualität bei.

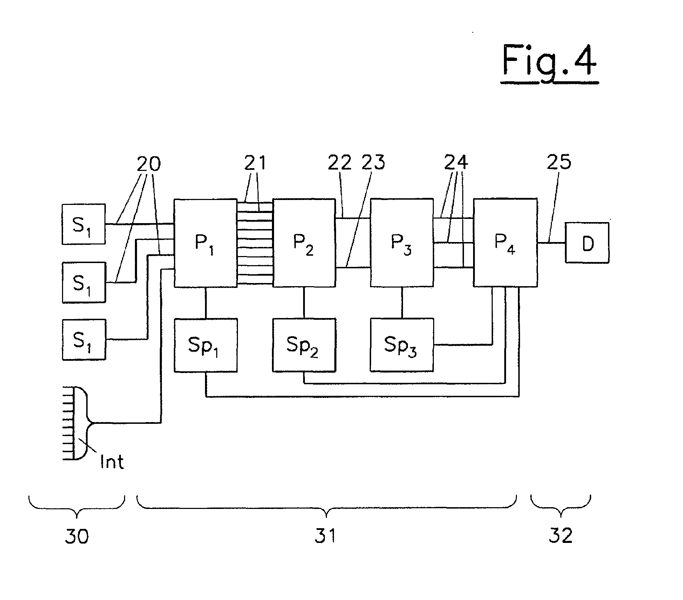

Fig. 4 zeigt als Blockdiagramm schematisch den Aufbau eines erfindungsgemäßen Bewertungssystems. Über einzelnen Sensoren $S_1$, $S_2$, $S_3$ werden verschiedene physikalische Größen erfasst, wie etwa die Längsbeschleunigung, Geräusche, Vibrationen oder dergleichen. Weitere physikalische Größen werden über eine Schnittstelle Int von der Fahrzeugelektronik abgefragt. Insgesamt werden die Sensoren $S_1$, $S_2$, $S_3$ und die Schnittstelle Int als Datenerfassungssystem 30 bezeichnet.

Über Datenleitungen 20 werden die Messwerte an eine erste Recheneinheit $P_1$ übermittelt, die mit einem Speicher $Sp_1$ verbunden ist. In dieser ersten Recheneinheit $P_1$ werden - wie oben beschrieben - verarbeitete physikalische Daten abgeleitet, wie etwa Drehzahlschwankung, Ruckelfrequenzen, Schaltzeiten, Einkuppelruckel, usw.. Die verschiedenen physikalischen Daten werden im Speicher $Sp_1$ abgelegt. Diese Daten werden über Datenleitungen 21 an eine zweite Recheneinheit $P_2$ übermittelt, die mit einem zweiten Speicher $Sp_2$ verbunden ist. In diesem Speicher $Sp_2$ sind Formeln und Parameter abgelegt, die es der zweiten Verarbeitungseinheit $P_2$ ermöglichen, anhand von Triggerbedingungen das Auftreten verschiedener Fahrzustände zu identifizieren.

Die für den erfassten Fahrzustand relevanten physikalischen Daten werden über eine Datenleitung 22 an eine dritte Recheneinheit $P_3$ weitergegeben und gleichzeitig werden über eine weitere Datenleitung 23 Informationen über den erfassten Fahrzustand übermittelt. In der Recheneinheit $P_3$ werden aus diesen Daten die verschiedenen lokalen Bewertungen errechnet und in einem dritten Speicher $Sp_3$ abgelegt. Über Datenleitungen 24 werden diese lokalen Bewertungen an eine vierte Recheneinheit $P_4$ weitergegeben, die ebenfalls mit den Speichern $Sp_1$, $Sp_2$ und $Sp_3$ in Verbindung steht und in der in der oben beschriebenen Weise die Mittelwerte, Korrekturgrößen und korrigierten lokalen Bewertungen berechnet werden. Weiters werden auch die Gesamtbewertungen sowie der Gesamtindex berechnet und über eine Datenleitung 25 ausgegeben. In einer Anzeigeeinheit D können diese dargestellt und analysiert werden.

Die Recheneinheiten $P_1$, $P_2$, $P_3$ und $P_4$ werden geminsam als Berechnungseinheit 31 bezeichnet und können auch physisch in einem Gerät kombiniert sein. 32 bezeichnet allgemein eine Ausgabeeinheit.

Die vorliegende Erfindung ermöglicht es, die Bewertung der Fahrbarkeit von Fahrzeugen weiter zu verfeinern und mit einer erhöhten Genauigkeit und Reproduzierbarkeit darzustellen.

**Patentansprüche**

1.  Verfahren zur Beurteilung der Fahrbarkeit von Fahrzeugen mit folgenden Schritten:

- Erfassung von fahrbarkeitsrelevanten physikalischen Daten während des Fahrbetriebs des Fahrzeugs;
- Überprüfung der Daten auf das Vorliegen von Triggerbedingungen, die das Vorliegen bestimmter Fahrzustände anzeigen;
- bei Vorliegen eines bestimmten Fahrzustands Berechnung mindestens einer lokalen Bewertung, die eine Beurteilung eines für den Fahrzustand relevanten Bewertungskriteriums ist;
- Berechnung einer Gesamtbewertung für den erfassten Fahrzustand;

**dadurch gekennzeichnet, dass** bei wiederholtem Auftreten von gleichen Fahrzuständen für die Bewertungen eine Korrekturgröße berechnet wird, die von den Unterschieden im Verhalten des Fahrzeugs bei gleichen Fahrzuständen abhängt und dass eine korrigierte Bewertung berechnet wird, in der diese Korrekturgröße berücksichtigt ist.

2. Verfahren nach Anspruch 1, **dadurch gekennzeichnet, dass** als Korrekturgröße ein Maß für die Unterschiede der einzelnen Bewertungen, vorzugsweise die Varianz der Bewertungen bei gleichen Fahrzuständen eingesetzt wird.

3. Verfahren nach Anspruch 1, **dadurch gekennzeichnet, dass** als Korrekturgröße ein Maß für die Unterschiede in einer physikalischen Größe eingesetzt wird, die für die Bewertung wesentlich ist.

4. Verfahren nach einem der Ansprüche 1 bis 3, **dadurch gekennzeichnet, dass** für die Berechnung der Korrekturgröße eine Funktion verwendet wird, in die die Zeit zwischen dem Auftreten einzelner Fahrzustände und die Abfolge der Abweichungen berücksichtigt wird.

5. Verfahren nach einem der Ansprüche 1 bis 4, **dadurch gekennzeichnet, dass** für jede lokale Bewertung eines Fahrzustands eine korrigierte lokale Bewertung berechnet wird.

6. Verfahren nach Anspruch 5, **dadurch gekennzeichnet, dass** aus den korrigierten lokalen Bewertungen eine korrigierte Gesamtbewertung berechnet wird.

7. Verfahren nach einem der Ansprüche 1 bis 6, **dadurch gekennzeichnet, dass** für mindestens ein Bewertungskriterium eine Haupteinflussgröße definiert wird, die für die Beurteilung dieses Bewertungskriteriums wesentlich ist und dass für diese Haupteinflussgröße ein Sollwert berechnet wird, der unter Berücksichtigung der übrigen Einflussgrößen eine optimale Bewertung ergeben würde, und dass die Abweichung der Haupteinflussgröße von diesem Sollwert zur Berechnung der Korrekturgröße herangezogen wird.

8. Verfahren nach Anspruch 7, **dadurch gekennzeichnet, dass** die Abweichung der Haupteinflussgröße vom Sollwert für verschiedene Bereiche der übrigen Einflussgrößen getrennt berücksichtigt wird.

9. Verfahren nach einem der Ansprüche 1 bis 8, **dadurch gekennzeichnet, dass** aus den physikalischen Daten mindestens eine Kenngröße abgeleitet wird, die den Typus des jeweiligen Fahrers repräsentiert und dass diese Kenngröße bei der Bewertung berücksichtigt wird.

10. Verfahren nach einem der Ansprüche 1 bis 9, **dadurch gekennzeichnet, dass** der Fahrbetrieb des Fahrzeuges auf einem Prüfstand durchgeführt wird.

11. Verfahren nach einem der Ansprüche 1 bis 9, **dadurch gekennzeichnet, dass** der Fahrbetrieb des Fahrzeuges durch ein Modell simuliert wird.

12. Vorrichtung zur Beurteilung der Fahrbarkeit von Fahrzeugen mit einer Datenerfassungseinheit (30) zur Erfassung von fahrbarkeitsrelevanten physikalischen Daten während des Fahrbetriebes des Fahrzeuges mit einer Berechnungseinheit (31) zur Überprüfung der Daten auf das Vorliegen von Trigger-Bedingungen, die das Vorliegen bestimmter Fahrzustände anzeigen und zur Berechnung mindestens einer lokalen Bewertung, die eine Beurteilung eines für den Fahrzustand relevanten Bewertungskriteriums ist und weiterhin Berechnung einer Gesamtbewertung für den erfassten Fahrzustand sowie mit einer Ausgabeeinheit zur Anzeige von physikalischen Daten und Bewertungen, **dadurch gekennzeichnet, dass** die Berechnungseinheit (31) dazu ausgebildet ist, bei wiederholtem Auftreten von identischen Fahrzuständen für die Bewertungen eine Korrekturgröße zu berechnen, die von den Unterschieden im Verhalten des Fahrzeuges bei den identischen Fahrzuständen abhängt und eine korrigierte Bewertung zu berechnen, in der diese Korrekturgröße berücksichtigt ist.

13. Vorrichtung nach Anspruch 12, **dadurch gekennzeichnet, dass** die Datenerfassungseinheit (30) Sensoren zur Erfassung von fahrbarkeitsrelevanten physikalischen Daten umfasst und weiters eine Schnittstelle zur Fahrzeugelektronik aufweist.

14. Vorrichtung nach Anspruch 12 oder 13, **dadurch gekennzeichnet, dass** die Datenerfassungseinheit (30) eine Schnittstelle zu einem Rollenprüfstand oder Motorprüfstand aufweist.

15. Vorrichtung nach Anspruch 12 oder 13, **dadurch gekennzeichnet, dass** die Datenerfassungseinheit (30) eine Schnittstelle zu einem Fahrzeugsimulationsmodell aufweist.

**Claims**

1. A method for judging the drivability of vehicles having the following steps:

   - acquiring drivability-relevant physical data during the driving operation of the vehicle;
   - checking the data for the presence of trigger conditions which indicate the existence of specific driving states;
   - if a specific driving state exists, calculating at least one local evaluation, which is a judgment of an evaluation criterion relevant for the driving state;
   - calculating an overall evaluation for the acquired driving state;

   **characterised in that** upon repeated occurrence of identical driving states, a correction variable is calculated for the evaluations, which is a function of the differences in the behavior of the vehicle upon identical driving states, and a corrected evaluation is calculated, in which this correction variable is considered.

2. The method according to claim 1, **characterised in that** a measure of the differences of the individual evaluations, preferably the variance of the evaluations upon identical driving states, is used as the correction variable.

3. The method according to claim 1, **characterised in that** a measure of the differences in a physical variable, which is essential for the evaluation, is used as the correction variable.

4. The method according to one of claims 1 to 3, **characterised in that** a function is used for the calculation of the correction variable in which the time between the occurrence of individual driving states and the sequence of the deviations are taken into consideration.

5. The method according to one of claims 1 to 4, **characterised in that** a corrected local evaluation is calculated for each local evaluation of a driving state.

6. The method according to claim 5, **characterised in that** a corrected overall evaluation is calculated from the corrected local evaluations.

7. The method according to one of claims 1 to 6, **characterised in that** a main influencing variable is defined for at least one evaluation criterion, which is essential for the judgment of this evaluation criterion, and a target value is calculated for this main influencing variable, which would result in an optimum evaluation in consideration of the remaining influencing variables, and the deviation of the main influencing variable from this target value is used to calculate the correction variable.

8. The method according to claim 7, **characterised in that** the deviation of the main influencing variable from the target value is taken into consideration separately for various ranges of the remaining influencing variables.

9. The method according to one of claims 1 to 8, **characterised in that** at least one characteristic variable is derived from the physical data, which represents the type of the particular driver, and this characteristic variable is taken into consideration upon the evaluation.

10. The method according to one of claims 1 to 9, **characterised in that** the driving operation of the vehicle is performed on a test stand.

11. The method according to one of claims 1 to 9, **characterised in that** the driving operation of the vehicle is simulated by a model.

12. A device for judging the drivability of vehicles, having a data acquisition unit (30) for acquiring drivability-relevant physical data during the driving operation of the vehicle, having a calculation unit (31) for checking the data for the existence of trigger conditions, which indicate the existence of specific driving states, and for calculating at least one local evaluation, which is a judgment of an evaluation criterion relevant for the driving state, and also calculating an overall evaluation for the acquired driving state, and having an output unit for displaying physical data and evaluations, **characterised in that** the calculation unit (31) is implemented for the purpose, upon repeated occurrence of identical driving states, of calculating a correction variable for the evaluations, which is a function of the differences in the behavior of the vehicle upon the identical driving states, and of calculating a corrected evaluation in which this correction variable is considered.

13. The device according to claim 12, **characterised in that** the data acquisition unit (30) comprises sensors for acquiring drivability-relevant physical data and also has an interface to the vehicle electronics.

14. The device according to claim 12 or 13, **characterised in that** the data acquisition unit (30) has an interface to a roller test stand or engine test stand.

15. The device according to claim 12 or 13, **characterised in that** the data acquisition unit (30) has an interface to a vehicle simulation model.

## Revendications

1. Procédé d'évaluation du comportement de conduite de véhicules comportant les étapes consistant à :

   - détecter des données physiques importantes du comportement de conduite pendant la circulation du véhicule,
   - vérification des données pour déterminer la présence de conditions de déclenchement qui indiquent la présence d'états de conduite déterminés,
   - en présence d'un état de conduite déterminé, calcul d'au moins une estimation locale qui est une évaluation d'un critère d'estimation important de l'état de conduite,
   - calculer une estimation totale de l'état de conduite détecté,

   **caractérisé en ce que**
   lorsque des mêmes états de conduite se présentent de manière répétitive on calcule pour les estimations une grandeur de correction qui dépend des différences de comportement du véhicule pour des mêmes états de conduite, et on calcule une estimation corrigée dans laquelle on tient compte de cette grandeur de correction.

2. Procédé conforme à la revendication 1,
   **caractérisé en ce qu'**
   en tant que grandeur de correction on utilise une mesure des différences entre les différentes estimations, de préférence la variance des estimations pour des mêmes états de conduite.

3. Procédé conforme à la revendication 1,
   **caractérisé en ce qu'**
   en tant que grandeur de correction on utilise une mesure des différences d'une grandeur physique qui est importante pour l'estimation.

4. Procédé conforme à l'une des revendications 1 à 3,
   **caractérisé en ce que**
   pour le calcul de la grandeur de correction on utilise une fonction dans laquelle on tient compte du temps entre l'apparition d'états de conduite donnés et la séquence des écarts.

5. Procédé conforme à l'une des revendications 1 à 4,
   **caractérisé en ce que**
   pour chacune des estimations locales d'un état de conduite on calcule une estimation locale corrigée.

6. Procédé conforme à la revendication 5,
   **caractérisé en ce qu'**
   à partir des estimations locales corrigées on calcule une estimation totale corrigée.

**7.** Procédé conforme à l'une des revendications 1 à 6,
**caractérisé en ce que**
pour au moins un critère d'estimation, on définit une grandeur d'influence principale qui est importante pour l'évaluation de ce critère d'estimation, et, pour cette grandeur d'influence principale on calcule une valeur de consigne qui permettrait d'obtenir une estimation optimum en prenant en considération les autres grandeurs d'influence, et, on déduit l'écart de la grandeur d'influence principale de cette valeur de consigne pour le calcul de la grandeur de correction.

**8.** Procédé conforme à la revendication 7,
**caractérisé en ce qu'**
on prend séparément en considération l'écart de la grandeur d'influence principale de la valeur de consigne pour différentes zones des autres grandeurs d'influences.

**9.** Procédé conforme à l'une des revendications 1 à 8,
**caractérisé en ce qu'**
on déduit des données physiques au moins une grandeur caractéristique qui représente le type de conducteur considéré et on prend en considération cette grandeur caractéristique lors de l'estimation.

**10.** Procédé conforme à l'une des revendications 1 à 9,
**caractérisé en ce que**
l'on matérialise la circulation du véhicule sur un banc d'essai.

**11.** Procédé conforme à l'une des revendications 1 à 9,
**caractérisé en ce que**
l'on simule la circulation du véhicule par un modèle.

**12.** Dispositif d'évaluation du comportement de conduite de véhicule comportant une unité de détection de données (30) pour détecter des données physique importantes du comportement de conduite pendant la circulation du véhicule, une unité de calcul (31) pour vérifier ces données pour déterminer la présence de conditions de déclenchement qui indiquent la présence d'états de conduite déterminés et pour calculer au moins une estimation locale qui est une évaluation d'un critère d'estimation important de l'état de conduite et en outre calculer une estimation totale de l'état de conduite détecté, ainsi qu'une unité d'émissions pour indiquer des données physiques et des estimations,
**caractérisé en ce que**
l'unité de calcul (31) est réalisée de sorte que lorsque des mêmes états de conduite se présentent de manière répétitive, elle calcule pour les estimations une grandeur de correction qui dépend des différences de comportement du véhicule pour des mêmes états de conduite, et calcule une estimation corrigée dans laquelle cette grandeur de correction est prise en considération.

**13.** Dispositif conforme à la revendication 12,
**caractérisé en ce que**
l'unité de détection de données (30) comporte des détecteurs pour détecter des données physiques importantes du comportement de conduite et est en outre équipée d'une interface avec l'électronique du véhicule.

**14.** Dispositif conforme à la revendication 12 ou 13,
**caractérisé en ce que**
l'unité de détection de données (30) comporte une interface avec un banc d'essai du roulement ou un banc d'essai du moteur.

**15.** Dispositif conforme à la revendication 12 ou 13,
**caractérisé en ce que**
l'unité de détection de données (30) comporte une interface avec un modèle de simulation du véhicule.

Fig.1

Fig.2

Fig.3

Fig.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0846945 A
- EP 0984260 A
- EP 1085312 A

**In der Beschreibung aufgeführte Nicht-Patentliteratur**

- **LIST HELMUT ; SCHÖGGL PETER.** Objective Evaluation of Vehicle Driveability. *Paper SAE 1998, 980204,* 1998